# EUROPÄISCHE PATENTSCHRIFT

(11) **EP 4 758 402 B1**
(45) Veröffentlichungstag und Bekanntmachung des Hinweises auf die Patenterteilung: **30.09.2026**
(21) Anmeldenummer: 24755495.9
(22) Anmeldetag: 08.08.2024
(51) Int. Cl.: G01K 7/08, F16C 17/24, F16C 19/52

(54) **SENSORSYSTEM UND VERFAHREN ZUR ZUSTANDSBESTIMMUNG**
SENSOR SYSTEM AND METHOD FOR ASCERTAINING A CONDITION
SYSTÈME DE CAPTEUR ET PROCÉDÉ DE DÉTERMINATION D'UN ÉTAT

(30) Priorität: 10.08.2023 DE 102023121431
(43) Veröffentlichungstag der Anmeldung: 17.06.2026
(73) Patentinhaber: SAF-HOLLAND GmbH, 63856 Bessenbach (DE)
(72) Erfinder: SCHÄFERS, Simon, 61130 Nidderau-Erbstadt (DE); MÜLLER, Daniel, 63741 Aschaffenburg (DE)
(74) Vertreter: Müller Schupfner & Partner Patent- und Rechtsanwaltspartnerschaft mbB (Muc)
(86) Internationale Anmeldenummer: PCT/EP2024/072458
(87) Internationale Veröffentlichungsnummer: WO 2025/032175

(56) Entgegenhaltungen:
- DE-A1- 3 326 849
- DE-B3- 102012 107 663
- DE-U1- 29 820 623
- JP-A- 2005 017 147
- JP-A- S5 393 080

## Beschreibung

Die vorliegende Erfindung betrifft ein Sensorsystem und ein Verfahren zur Zustandsbestimmung in einem Fahrzeug.

Sensorsysteme zur Überwachung des Zustands von einzelnen Komponenten und Baugruppen eines Fahrzeuges sind aus dem Stand der Technik bereits bekannt. So wird an modernen Kraftfahrzeugen, wie Pkw oder Nutzfahrzeugen, eine Vielzahl an Sensoren eingesetzt, welche in zentralen Datenverarbeitungseinheiten ausgewertet werden, um einem Fahrer des Nutzfahrzeuges oder einem Mechaniker in der Werkstatt Informationen bezüglich der einzelnen Komponenten des Fahrzeuges bereitzustellen. Als nachteilig bei den aus dem Stand der Technik bekannten Sensorsystemen hatte sich jedoch erwiesen, dass eine Vielzahl von Kabeln verlegt werden müssen, welche zum einen das Gewicht des Fahrzeuges erhöhen und welche zum anderen aufgrund ihrer schieren Anzahl auch eine Unübersichtlichkeit der am Fahrzeug vorhandenen Verkabelung verursachen. Darüber hinaus ist die große Menge der üblicherweise an einem Kraftfahrzeug verlegten Kabel auch fehleranfällig, da die Wahrscheinlichkeit eines Kabelbruches nachvollziehbarer Weise mit der Anzahl an verlegten Kabeln ansteigt und sich gleichzeitig die Fehlersuche bei einer großen Anzahl von Kabeln schwieriger gestaltet.

Aus der DE29820623U1 ist ein einadriges Thermoelementsystem zur kontaktlosen Temperaturmessung an einem Motorlager bekannt. Dabei wird ein elektrischer Leiter, beispielsweise aus Kupfer, mit seinem einen Ende an einem heißeren Bereich des Lagers und mit seinem anderen Ende an einem kälteren Bereich des Lagers kontaktiert. Die aufgrund der Temperaturdifferenz im Leiter entstehende Thermospannung führt zu einem Stromfluss, dessen magnetisches Feld mittels eines Hall-Sensors detektiert wird. Auf diese Weise kann die Temperaturdifferenz zwischen den beiden Lagerbereichen bestimmt werden.

Aufgabe der vorliegenden Erfindung ist es, ein Sensorsystem bereitzustellen, welches insbesondere einfach ausgebildet ist. Damit verbunden ist es auch Aufgabe der vorliegenden Erfindung, ein Verfahren zur Zustandsbestimmung anzubieten, welches die aus dem Stand der Technik bekannten Nachteile vermeidet.

Diese Aufgabe wird gelöst mit einem Sensorsystem gemäß Anspruch 1 sowie einem Verfahren nach Anspruch 14. Es wird darüber hinaus der Einsatz eines Sensorsystems in einem Fahrzeug vorgeschlagen.

Erfindungsgemäß ist Sensorsystem zum Einsatz in einem Fahrzeug vorgesehen, umfassend einen ersten Leiter und ein Fahrzeugteil, wobei der erste Leiter aus einem anderen Material ausgebildet ist als das Fahrzeugteil, wobei der erste Leiter nur in einem ersten Messabschnitt elektrisch leitend mit dem Fahrzeugteil verbunden ist und beabstandet vom ersten Messabschnitt elektrisch isoliert vom Material des Fahrzeugteils an diesem festgelegt ist, wobei im ersten Messabschnitt eine erste Temperatur vorliegt, welche sowohl im Material des erste Leiters im Bereich des ersten Messabschnitts als auch im Material des Fahrzeugteils im ersten Messabschnitts vorliegt, wobei der erste Leiter in einem zweiten Messabschnitt, welcher beabstandet vom ersten Messabschnitt am Fahrzeugteil angeordnet und festgelegt ist, derart, dass der erste Leiter im Bereich des zweiten Messabschnitts eine zweite Temperatur hat, welche im Wesentlichen auch im Material des Fahrzeugteils im zweiten Messabschnitt vorliegt, wobei das Sensorsystem eine Messeinheit umfasst, welche ausgelegt ist, im Bereich des zweiten Messabschnitts eine erste elektrische Spannung zwischen dem ersten Leiter und dem Fahrzeugteil zu messen und aus dieser ersten elektrischen Spannung eine erste Temperaturdifferenz zu berechnen. Als Temperatur, welche im Wesentlichen auch im Material des Fahrzeugteils im zweiten Messabschnitt vorliegt, wir eine annähernd identische Temperatur mit einer Bandbreite von 1 - 4K Unterschied angesehen. Aufgrund der räumlichen Beabstandung des zweiten Endes des Leiters vom Fahrzeugteil im zweiten Messbereich, liegt eine mathematisch vollständige Identität der Temperatur im Fahrzeugteil und am zweiten Ende des Leiters in der Regel nicht vor. Der Verbund aus erstem Leiter und Fahrzeugteil fungiert somit als Thermoelement. Solche Thermoelemente sind an sich als Messsensoren aus dem Stand der Technik bekannt. Demnach wird ein Thermoelement aus zwei elektrischen Leitern, insbesondere Metallen, gebildet, welche aus verschiedenem Material bestehen. Ein erstes Ende der beiden elektrischen Leiter wird dabei elektrisch leitend miteinander verbunden und in einem ersten Messabschnitt angeordnet. Die beiden jeweils voneinander getrennten, distal gegenüberliegenden Enden der beiden elektrischen Leiter werden in einem zweiten Temperaturbereich angeordnet und es kann aufgrund der unterschiedlichen Temperatur vom ersten Ende zum zweiten Ende des jeweiligen Leiters eine sogenannte Thermospannungen zwischen den beiden lose liegenden Leiterenden im zweiten Temperaturbereich gemessen werden, welche abhängig von der Temperaturdifferenz zwischen dem ersten Temperaturbereich und dem zweiten Temperaturbereich ist. Das Merkmal, wonach der erste Leiter nur im ersten Messabschnitt elektrisch leitend mit dem Fahrzeugteil verbunden ist, umfasst dabei im Rahmen der vorliegenden Erfindung auch den Fall, dass zwischen dem zweiten Ende des ersten Leiters und dem Fahrzeugteil im zweiten Messbereich eine Messeinheit angeordnet und jeweils mit dem ersten Leiter und dem Fahrzeugteil elektrisch leitend verbunden ist. Der zur Spannungsmessung durch die Messeinheit, mit Vorteil ein Voltmeter, fließende Messstrom ist aber im Rahmen der vorliegenden Erfindung vernachlässigbar und das zweite Ende des ersten Leiters wird als de facto elektrisch getrennt vom Fahrzeugteil angesehen. Mit anderen Worten ist der erste Leiter nur im ersten Messbereich unmittelbar und direkt mit dem Fahrzeugteil elektrisch leitend verbunden, wobei im zweiten Messbereich allenfalls eine indirekte und vernachlässigbare indirekte Verbindung des ersten Leiters über eine Messeinheit mit dem Fahrzeugteil besteht. Anstelle der Verwendung eines klassischen Thermoelements im Bereich des Fahrzeuges, wird dabei das Fahrzeugteil selbst als einer der Leiter des Thermoelements verwendet, wobei nur ein zusätzlicher Leiter erforderlich ist, um dieselbe Funktion wie bei einem klassischen Thermoelement zu erreichen. Hierbei kommt es selbstverständlich darauf an, dass die Materialkombinationen des Herstellungsmaterials des Fahrzeugteils und des ersten Leiters geeignet ist, eine verlässliche Temperaturdifferenzbestimmung zwischen zwei Messabschnitten zu erlauben. Im Rahmen der vorliegenden Erfindung ist es daher vorgesehen, dass das Herstellungsmaterial des ersten Leiters an das Herstellungsmaterial des Fahrzeugteils entsprechend angepasst ist. In einer sehr grundlegenden Ausführungsform der vorliegenden Erfindung ist es vorgesehen, dass das Sensorsystem eine Temperaturdifferenz zwischen einem ersten Messabschnitt und einem zweiten Messabschnitt ermittelt, wobei im ersten Messabschnitt eine erste Temperatur und im zweiten Messabschnitt eine zweite Temperatur vorliegt. Im ersten Messabschnitt sind der erste Leiter und das Fahrzeugteil miteinander elektrisch verbunden und über die restliche Erstreckung des ersten Leiters bis hin zum zweiten Messabschnitt elektrisch isoliert voneinander angeordnet. Die elektrische Verbindung zwischen dem ersten Leiter im ersten Messabschnitt und dem Fahrzeugteil wir dabei vorzugsweise durch auflöten mit metallischem Lot hergestellt. Alternativ kann der erste Leiter in einer Aussparung am Fahrzeugteil eingesteckt und dort verklemmt sein. Durch eine strategisch günstige Anordnung des ersten Messabschnitts im Bereich beispielsweise eines Fahrzeugfahrwerkes, kann bereits mit dieser einfachsten Ausführungsform des Sensorsystems eine kritische Temperatur im ersten Messabschnitt ermittelt werden. Dies kann beispielsweise der Fall sein, wenn im Bereich der Wälzlager einer Radaufhängung eine ungewöhnlich hohe Temperatur herrscht, welche im Vergleich zu einem zweiten, weiter außen liegenden Bereich an einem Achsstummel sehr hoch ausfällt. In diesem Fall kann das Sensorsystem eine hohe Temperaturdifferenz ermitteln, welche auf einen potentiellen Fehler in einem der Wälzlager der Radaufhängung des Fahrzeuges schließen lässt. Zur Bestimmung einer Temperaturdifferenz weist das Sensorsystem eine Messeinheit auf, welche aus einer im zweiten Messabschnitt ermittelten ersten elektrischen Spannung, also der Thermospannung zwischen dem Material des Fahrzeugteils und dem Material des ersten Leiters, zwischen dem distalen Ende des ersten Leiters und dem Fahrzeugteil eine dieser Spannung entsprechende erste Temperaturdifferenz berechnet. Zu diesem Zweck ist die Messeinheit mit einem Datenverarbeitungssystem, insbesondere einem Computer ausgestattet, welches mit einem Speicher verbunden ist in welchem entsprechende Daten zu bestimmten Materialpaarungen und sich daraus ergebenden Thermospannungen hinterlegt sind, welche wiederum für diese bestimmte Materialpaarung für eine bestimmte Temperaturdifferenz stehen. Solche Daten werden üblicherweise in Versuchsreihen ermittelt, bei denen für bekannte Temperaturdifferenzen, die entsprechenden Spannungen an den losen Enden eines Thermoelements mit bestimmter Materialpaarung ermittelt werden. Der Vorteil der Verwendung nur eines Leiters in Kombination mit dem ohnehin aus Metall und damit elektrisch leitend ausgeführten Fahrzeugteil liegt darin, dass das Sensorsystem einfach und kostengünstig ausgeführt ist und der elektrische Leiter besonders platzsparend im Fahrwerk untergebracht werden kann. Das Fahrzeugteil ist im Rahmen der vorliegenden Erfindung mit Vorteil ein Teil eines Fahrwerks oder Motors eines Kraftfahrzeugs oder Anhängers, insbesondere bevorzugt eines Nutzfahrzeugs. Als Beispiele eines Fahrzeugteils gemäß der vorliegenden Erfindung kommen Achsstummel, Längslenker, Lagerböcke, Bremsträger, Radnaben, Radkappen, Achsrohre, der Rahmen eines Fahrzeuges, an welchem weitere Bauteile befestigt sind, oder auch Gehäuse aus Metall in Frage. Als Fahrzeugteil im Rahmen der vorliegenden Erfindung wird insbesondere nicht ein elektrisches Kabel an sich angesehen, da dieses in der Regel neben der elektrisch leitenden Funktion keine weitere Funktion eines Fahrzeugteils im Bereich des Motors oder Fahrwerks eines Kraftfahrzeugs oder Anhängers besitzt. Insbesondere ein herkömmliches Thermoelement umfassend zwei Drähte kann dabei nicht als Kombination eines ersten Leiters und eines Fahrzeugteils im Rahmen der vorliegenden Erfindung angesehen werden,

In einer Ausführungsform des Sensorsystems ist der erste Leiter im Bereich zwischen dem ersten und dem zweiten Messabschnitt am Fahrzeugteil formschlüssig und/oder stoffschlüssig festgelegt. Mit Vorteil ist also der erste Leiter nicht nur im Bereich des ersten Messabschnitts am Fahrzeugteil festgelegt, sondern mit Vorteil im überwiegenden Teil seiner Erstreckung zwischen dem ersten und dem zweiten Messabschnitt am Fahrzeugteil festgelegt. Es kann hierdurch Kabelgewirr vermieden werden und insbesondere eine platzsparende Anordnung des Sensorsystems erreicht werden. Darüber hinaus ist durch das besonders enge Anordnen des nur einen elektrischen Leiters am Fahrzeugteil auch die Fehleranfälligkeit reduziert, da sich der elektrische Leiter sozusagen an das Fahrzeugteil anschmiegen lässt, wodurch lose und vom Fahrzeugteil abstehende Teile des Leiters vermieden werden können und somit auch dessen mechanische Sicherheit gewährleistet ist. Mit anderen Worten wird der Leiter gemäß der vorliegenden Erfindung sehr gut gegen Umwelteinflüsse und mechanische Einwirkungen geschützt.

In einer Ausführungsform des Sensorsystems ist das Fahrzeugteil aus einer eisenhaltigen Legierung ausgebildet ist und der erste Leiter aus einer kupferhaltigen Legierung ausgebildet. Es hat sich gezeigt, dass insbesondere eine Materialkombination aus einer eisenhaltigen Legierung, wie sie üblicherweise im Bereich der Fahrwerkskomponenten von Kraftfahrzeugen Anwendung finden, und einer kupferhaltigen Legierung als Material des ersten Leiters besonders zuverlässige Thermospannungen ergibt, welche eine verlässliche Temperaturdifferenzbestimmung in der Messeinheit erlauben.

Mit Vorteil weist das Sensorsystem einen zweiten Leiter auf, welcher in einem dritten Messabschnitt mit dem Fahrzeugteil elektrisch leitend verbunden ist und beabstandet vom dritten Messabschnitt im zweiten Messabschnitt oder in einem vierten Messabschnitt am Fahrzeugteil angeordnet und festgelegt ist, derart, dass der zweite Leiter im Bereich des zweiten Messabschnitts die zweite Temperatur oder im Bereich des vierten Messabschnitts eine dritte, bzw. eine weitere Temperatur aufweist, welche auch im Material des Fahrzeugteils im Bereich des zweiten oder vierten Messabschnitts vorliegt, wobei die Messeinheit ausgelegt ist, eine zweite elektrische Spannung zwischen dem zweiten Leiter und dem Fahrzeugteil im Bereich des zweiten Messabschnitts oder des vierten Messabschnitts zu messen und aus dieser zweiten elektrischen Spannung eine zweite Temperaturdifferenz zu berechnen. Der zweite Leiter ist vorzugsweise mit denselben Materialeigenschaften wieder erste Leiter ausgestattet. Auch der zweite Leiter ist somit nur im dritten Messabschnitt mit dem Fahrzeugteil oder mit einem weiteren, zweiten Fahrzeugteil elektrisch leitend verbunden und wird in dem zu vorgeschriebenen zweiten Messabschnitt, oder in einem weiteren, vierten Messabschnitt an die Messeinheit angeschlossen. Auf diese Weise ermittelt die Messeinheit eine Temperaturdifferenz zwischen dem dritten Messabschnitt und entweder dem zweiten oder dem vierten Messabschnitt. Dabei ist die Messeinheit mit Vorteil dazu geeignet, die erste Temperaturdifferenz und die zweite Temperaturdifferenz miteinander zu vergleichen und auszugeben. Alternativ hierzu ist die Messeinheit mit Vorteil an ein ohnehin im Fahrzeug vorgesehenes elektronisches Datenverarbeitungssystemen angeschlossen, welches seinerseits die beiden Temperaturdifferenzen miteinander vergleicht und hieraus einen Rückschluss auf den Zustand des Fahrzeugteils oder des Fahrzeugsystems im ersten und im dritten Messabschnitt zieht.

In einer Ausführungsform des Sensorsystems ist der erste Messabschnitt benachbart zu einem Lagerabschnitt des Fahrzeugteils angeordnet, wobei im Lagerabschnitt zumindest ein Wälzlager am Fahrzeugteil festgelegt ist. Besonders bevorzugt ist also der erste Messabschnitt beispielsweise an einem Achsstummel vorgesehen, und mit Vorteil genauer an dem Bereich des Achsstummels, an welchem die Lagersitze für Wälzlager einer Radlagerung eines Fahrzeuges angeordnet sind. Diese Anordnung des ersten Messabschnitts erlaubt es somit, den Wärmeeintrag durch die Wälzlager in den Achsstummel zu überwachen. Steigt die Temperaturdifferenz vom Wälzlager Bereich zu einem anderen, in der Regel kühleren Bereich des Fahrwerkes an, so kann dies als Hinweis aufzunehmenden Lagerverschleiß angesehen werden. Bei Erreichen einer bestimmten, zuvor in Versuchen ermittelten Grenztemperaturdifferenz kann die Messeinheit oder das elektronische Datenverarbeitungssystemen des Fahrzeuges eine Warnung an den Fahrzeugführer oder an eine Werkstatt ausgeben, dass ein Lager verschlissen ist und getauscht werden sollte.

In einer Ausführungsform des Sensorsystems ist der dritte Messabschnitt benachbart zu einem Bereich der Festlegung eines Bremsträgers oder einer Bremsscheibe am Fahrzeugteil angeordnet. Die Anordnung des zusätzlichen, dritten Messabschnitts im Bereich eines Bremsträgers oder einer Bremsscheibe verleiht dem Sensorsystem die Möglichkeit, die Temperaturdifferenz zwischen dem ersten Messabschnitt in Relation zu dem üblicherweise relativ hohen Wärmeeintrag des Bremssystems in das Fahrzeugteil zu setzen. So kann, wenn das Bremssystem einen besonders hohen Wärmeeintrag in das Fahrzeugteil verursacht, sowohl die Temperaturdifferenz zwischen dem ersten Messabschnitt und dem zweiten Messabschnitt, als auch die Temperaturdifferenz zwischen dem dritten und dem zweiten Messabschnitt steigen, was aber in diesem Fall noch kein Ausdruck für erhöhten Verschleiß in der Nähe des ersten Messabschnitts ist. Im Gegensatz kann, wenn der Wärmeeintrag des Bremssystems in das Fahrzeugteil gering ist und dennoch eine große Temperaturdifferenz zwischen dem ersten Messabschnitt und dem zweiten Messabschnitt vorliegt, dies ein Hinweis für erhöhten Verschleiß in der Nähe des ersten Messabschnitts sein.

In einer Ausführungsform weist das Sensorsystem zumindest einen und vorzugsweise eine Vielzahl weiterer Leiter welche(r) in weiteren Messabschnitten mit dem Fahrzeugteil oder einem weiteren Bauteil eines Fahrzeugfahrwerks elektrisch leitend verbunden und an der Messeinheit angeschlossen ist, derart dass weitere Temperaturdifferenzen zwischen den Messabschnitten und dem zweiten oder vierten Messabschnitt ermittelbar sind. Die strategische Anordnung und Verteilung einer Vielzahl von Messabschnitten und entsprechenden Leitern gemäß der vorliegenden Erfindung erlaubt es somit, gezielt einzelne, kritische Bereiche des Fahrzeugfahrwerkes zu überwachen und ungewöhnliche Temperaturdifferenzen zwischen zwei bestimmten Messabschnitten als Indiz für erhöhten Verschleiß zu verarbeiten. Damit wird es möglich, Warnungen mit der Information, wo am Fahrzeug Probleme bestehen, ausgeben zu können, um gezielt Wartungsarbeiten am Fahrwerk des Fahrzeuges zu veranlassen.

In einer Ausführungsform des Sensorsystems ist zumindest einer der Leiter zumindest bereichsweise in einer am Fahrzeugteil ausgebildeten Nut geführt. Um den Leiter besonders geschützt im Bereich des Fahrzeugteils unterzubringen, ist vorzugsweise eine Nut in das Fahrzeugteil eingebracht, in welcher der Leiter ganz oder zumindest teilweise eingelegt ist.

In einer Ausführungsform des Sensorsystems ist zumindest einer der Leiter als flaches, vorzugsweise selbstklebendes Band ausgeführt. Zusätzlich oder alternativ zu einer Anordnung des Leiters in einer Nut, ist dieser vorzugsweise als elektrisch leitendes, folienartiges und selbstklebendes Element ausgebildet. Dies erlaubt es insbesondere auch nachträglich an bereits bestehenden Fahrwerken und Fahrzeugteilen, ein Sensorsystem gemäß der vorliegenden Erfindung herzustellen, ohne dass dabei der vorhandene Bauraum oder die vorhandenen Fahrzeugteile mechanisch bearbeitet werden müssen.

In einer Ausführungsform des Sensorsystems ist zumindest einer der Leiter auf das Fahrzeugteil aufgedruckt. Als Alternative zu einer selbstklebenden und elektrisch leitenden Folie, kann der oder die Leiter auch auf das Fahrzeugteil aufgedruckt sein. Es versteht sich, dass hierbei außerhalb des jeweiligen ersten oder dritten Messabschnitts eine Isolierschicht zwischen dem jeweiligen Leiter und dem Fahrzeugteil vorgesehen sein muss, um die elektrische Isolierung zwischen beiden Schichten zu erreichen. Ein Aufdrucken des oder der Leiter auf das Fahrzeugteil hat, ähnlich zur selbstklebenden Folie, den Vorteil einer nur geringen Beanspruchung des Bauraums. Besonders vorteilhaft ist hierbei, dass der Leiter auch mit besonders komplizierter und gegebenenfalls Hindernisse umgehender Geometrie auf das Fahrzeugteil aufgebracht werden kann, was mit einer Folie oder einem Kabel nur mit erhöhtem Aufwand möglich wäre.

Erfindungsgemäß ist der Einsatz eines Sensorsystems, wie zuvor beschrieben, in einem Nutzfahrzeug zur Bestimmung ungewollt hoher Temperaturen in einem bestimmten zu überwachenden Bereich eines Fahrzeugteils vorgesehen, wobei der erste Messabschnitt in dem zu überwachenden Bereich angeordnet ist und wobei ein dritter Messabschnitt in einem Referenzbereich des Nutzfahrzeuges angeordnet ist. Das zuvor beschriebene Sensorsystem eignet sich insbesondere zum Einsatz in einem Nutzfahrzeug, insbesondere in dessen Fahrwerk. Dabei kann durch die besonders platzsparende Ausführung des Sensorsystems der im Nutzfahrzeug zur Verfügung stehende Bauraum besonders gut genutzt werden. Weiterhin erlaubt der Einsatz eines zuvor beschriebenen Sensorsystems im Nutzfahrzeug eine besonders hohe Betriebssicherheit, da das Sensorsystem selbst gegen mechanische Einflüsse bestmöglich geschützt ist und die durch das Sensorsystem ermittelten Daten eine besonders präzise Überwachung des Materialverschleiß' in bestimmten Bereichen des Nutzfahrzeugfahrwerkes erlauben. Dabei wird das Sensorsystem mit Vorteil dazu eingesetzt, die Temperaturdifferenzen zwischen einem zu überwachenden Bereich und einem Referenzbereich zu vergleichen. Dies erlaubt es, in dem zu überwachenden Bereich vorliegende Temperaturanstiege in Relation zu den im übrigen Fahrwerk des Nutzfahrzeuges vorliegenden Temperaturanstiegen zu setzen und somit eine präzisere Fehlerermittlung zur erreichen.

Vorzugsweise schließt beim Einsatz des Sensorsystems der zu überwachende Bereich zumindest ein Wälz- oder Gleitlager ein, wobei der Referenzbereich vorzugsweise der Anschlussbereich eines Bremssystems ist. Insbesondere der Vergleich zwischen Anschlussbereich einer Bremsscheibe oder eines Bremsträgers und dem Bereich der Wälz- und Gleitlager erlaubt dabei eine besonders präzise Zustandsbestimmung im Nutzfahrzeugfahrwerk. So kann der üblicherweise im Bereich der Bremse auftretende hohe Wärmeeintrag aus der Überwachung der Temperatur im Lagerbereich herausgerechnet werden, was einen eindeutigeren Rückschluss auf die tatsächlich im Lagerbereich auftretenden Wärmeeinträge zulässt.

Vorzugsweise wird beim Einsatz des Sensorsystems aus zwei von der Messeinheit bestimmten Temperaturdifferenzen des Sensorsystems ein Wärmestromverhältnis zwischen dem zu überwachenden Bereich und dem Referenzbereich ermittelt. Das Wärmestromverhältnis ist dabei insbesondere ein Ausdruck für den Wärmeeintrag, welche im Referenzbereich Auftritt im Verhältnis zu dem Wärmeeintrag welcher in dem zu überwachenden Bereich auftritt. Wenn also ein verschlissenes Lager im überwachten Bereich des Fahrwerkes stark verschlissen ist und somit einen hohen Wärmeeintrag verursacht, so kann dieser ins Verhältnis gesetzt werden zudem üblicherweise sehr hohen Wärmeeintrag verursacht durch das Bremssystem eines Fahrwerkes. Somit wird die Zustandsbestimmung am Fahrwerkssystem mittels des vorgeschlagenen Sensorsysteme unabhängig von den Außentemperaturen, in welchen sich das Fahrzeug, insbesondere bevorzugt das Nutzfahrzeug, bewegt.

Erfindungsgemäß ist ein Verfahren zur Zustandsüberwachung in einem Fahrzeug vorgesehen, aufweisend die Schritte:
a) Bereitstellen eines Fahrzeugteils an welchem zumindest ein erster Leiter angeordnet und festgelegt ist, wobei der erste Leiter nur in einem ersten Messabschnitt elektrisch leitend mit dem Fahrzeugteil verbunden ist;
b) Verbinden einer Messeinheit mit dem ersten Leiter und mit dem Fahrzeugteil in einem zweiten Messabschnitt;
c) Ermitteln einer ersten elektrischen Spannung zwischen dem ersten Leiter und dem Fahrzeugteil im zweiten Messabschnitt;
d) Berechnen einer ersten Temperaturdifferenz zwischen dem ersten und dem zweiten Messabschnitt.

Das vorgeschlagene Verfahren ist somit besonders einfach durchzuführen, da zur Vorbereitung des zum Einsatz kommenden Sensorsystems lediglich ein Leiter an eine Fahrzeugteil angeordnet werden muss und in einem ersten Messabschnitt elektrisch leitend mit dem Fahrzeugteil verbunden sein muss. In einem zweiten Messabschnitt, welcher vom ersten Messabschnitt beabstandet ist, wird anschließend auf einfache Weise eine Spannung gemessen, welche Ausdruck einer bestimmten Temperaturdifferenz zwischen dem ersten Messabschnitt und dem zweiten Messabschnitt ist. Anhand dieser Temperaturdifferenz kann bereits ein Rückschluss auf den Zustand des Fahrzeugteils im ersten Messabschnitt gezogen werden.

Bevorzugt weist das Verfahren die weiteren Schritte auf:
e) Bereitstellen eines zweiten Leiters, welcher nur in einem dritten Messabschnitt elektrisch leitend mit dem Fahrzeugteil verbunden ist;
f) Verbinden der Messeinheit mit dem zweiten Leiter im zweiten Messabschnitt oder in einem vierten Messabschnitt;
g) Ermitteln einer zweiten elektrischen Spannung zwischen dem zweiten Leiter und dem Fahrzeugteil im zweiten Messabschnitt oder vierten Messabschnitt;
h) Berechnen einer zweiten Temperaturdifferenz zwischen dem dritten Messabschnitt und dem zweiten oder vierten Messabschnitt;
i) Vergleich der ersten mit der zweiten Temperaturdifferenz und Ermitteln eines Wärmestromverhältnisses zwischen dem ersten und dem dritten Messabschnitt.

In dem das im Verfahren verwendete Sensorsystem um einen oder eine Vielzahl weiterer Leiter erweitert wird, können im Zuge des Überwachungsverfahrens am Fahrzeug eine Vielzahl verschiedener weiterer Bereiche des Fahrzeugs überwacht werden. So kann mittels einer Messeinheit eine Vielzahl verschiedener Temperaturdifferenzen ermittelt werden, welche wiederum in Relation zueinander gesetzt präzise Zustandsdaten des Verschleißes einzelner Komponenten an verschiedenen Stellen eines Fahrzeuges bereitstellen. Das Überwachungsverfahren ist somit besonders präzise und benötigt, durch das Anbringen jeweils nur eines Leiters zwischen zwei Messabschnitten, nur geringe Ressourcen und Bauraum.

Weitere Vorteile und Eigenschaften der vorliegenden Erfindung ergeben sich aus der nachfolgenden Beschreibung ausgewählter Ausführungsbeispiele mit Bezug auf die beigefügten Figuren.

Es zeigen:
- Fig. 1: eine teilweise geschnittene Ansicht eines Bereiches eines Fahrwerks, mit daran angeordnetem Sensorsystem;
- Fig. 2: eine schematische Ansicht eines Sensorsystems;
- Fig. 3 und Fig. 4: zwei geschnittene Ansichten einer bevorzugten Ausführungsform eines Sensorsystems; und
- Fig. 5: ein schematisches Blockschaubild der Messabschnitt und der Messeinheit.

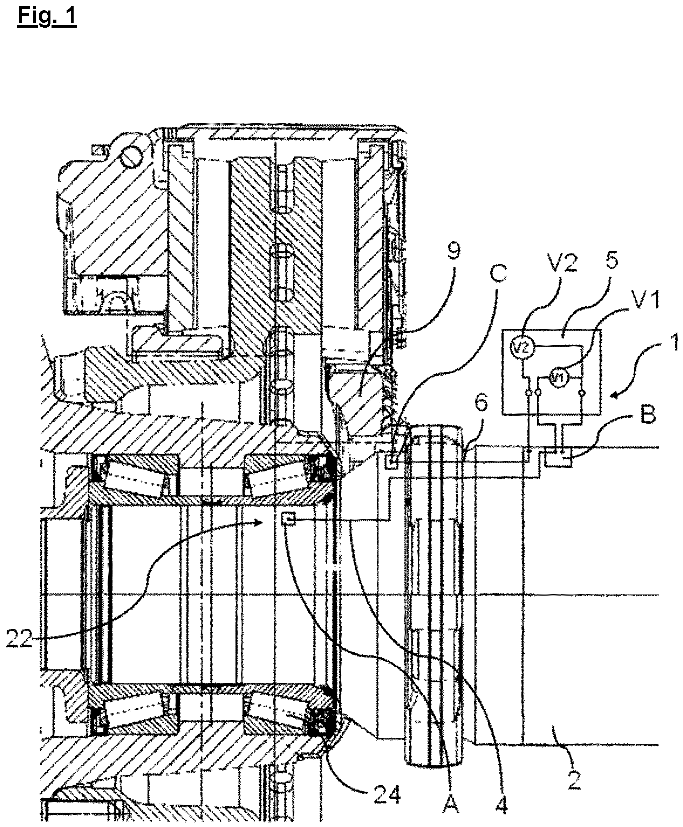

Figur 1 zeigt den Radaufhängungsbereich eines typischen Nutzfahrzeugfahrwerkes mit einer Ausführungsform eines Sensorsystems 1 gemäß der vorliegenden Erfindung. Das Sensorsystem weist einen ersten Leiter 4 auf, welcher in einem ersten Messabschnitt A an einem Fahrzeugteil 2 festgelegt und dort elektrisch leitend mit dem Fahrzeugteil 2 verbunden ist. In einem zweiten Messabschnitt B wird von einer Messeinheit 5 eine erste Spannung V1 zwischen dem ersten Leiter 4 und dem Fahrzeugteil 2 abgenommen. Darüber hinaus weist das Sensorsystem 1 vorzugsweise einen zweiten Leiter 6 auf, welcher in einem dritten Messabschnitt C elektrisch leitend mit dem Fahrzeugteil 2 verbunden ist und ebenfalls im 2. Messabschnitt B endet. Die Messeinheit 5 nimmt im zweiten Messabschnitt eine zweite Spannung V2 zwischen dem zweiten Leiter 6 und dem Fahrzeugteil 2 ab. Der erste Messabschnitt A ist dabei mit Vorteil in einem Lagerabschnitt 22, vorzugsweise gekennzeichnet durch zumindest ein Wälzlager 24, angeordnet, während der dritte Messbereich C in der Nähe des Anschlussbereiches eines Bremssystems 9 angeordnet ist. In der gezeigten, bevorzugten Ausführungsform von Figur 1 ist das Fahrzeugteil 2 der Achsstummel einer Nutzfahrzeugradaufhängung. Es versteht sich aber, dass als Fahrzeugteil 2 im Sinne der vorliegenden Erfindung auch ein sonstiges Anbauteil oder eine Baugruppe eines Fahrzeuges zum Einsatz gelangen kann, wobei dieses lediglich aus Metall ausgeführt sein muss, um in einer entsprechenden Materialpaarung mit einem entsprechenden Leiter, als Thermoelement fungieren zu können.

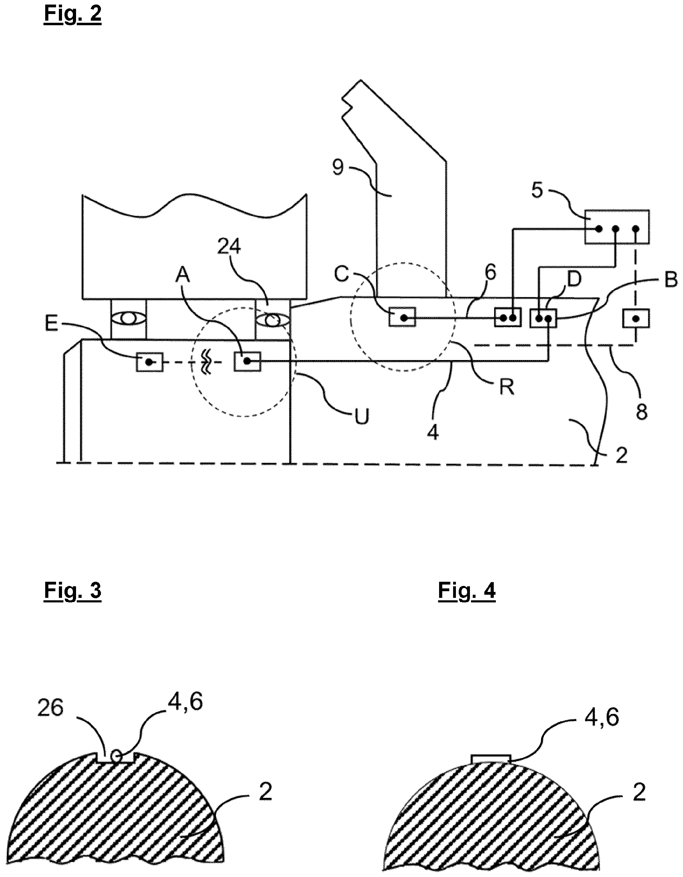

Figur 2 zeigt eine schematische Ansicht eines weiteren Ausführungsbeispiels der vorliegenden Erfindung. Dabei ist wiederum der erste Messbereich A in der Nähe eines ersten Wälzlagers 24 angeordnet, wobei in diesem Bereich ein Überwachungsbereich U im Sinne der vorliegenden Erfindung definiert ist. Weiterhin ist ein Referenzbereich R in der Nähe der Befestigung eines Bremssystems 9 definiert, wobei in diesem Referenzbereich der dritte Messabschnitt C angeordnet ist. Wie auch in der Ausführungsform von Figur 1, ist ein erster Leiter 4 elektrisch leitend mit dem Fahrzeugteil 2 im erste Messabschnitt A verbunden und ein zweiter Leiter 6 ist im dritten Messabschnitt C mit dem Fahrzeugteil 2 elektrisch leitend verbunden. Die Messeinheit 5 ist in diesem Ausführungsbeispiel dafür ausgelegt eine erste Spannung zwischen dem ersten Leiter 4 und dem Fahrzeugteil in einem zweiten Messabschnitt B zu messen und eine zweite Spannung in einem vierten Messabschnitt D zwischen dem zweiten Leiter 6 und dem Fahrzeugteil 2. Darüber hinaus ist angedeutet das neben dem ersten und dem zweiten Leiter 4, 6 auch ein weiterer Leiter 8 vorgesehen sein kann welcher in einem weiteren Messabschnitt E, der in diesem Ausführungsbeispiel unterhalb des zweiten Wälzlagers 24, links vom ersten Wälzlager 24, angeordnet ist, elektrisch leitend mit dem Fahrzeugteil 2 verbunden ist. Es versteht sich das neben den 3 gezeigten Leitern, die jeweils in verschiedenen Bereichen mit dem Fahrzeugteil 2 verbunden sind auch weitere zusätzliche Leiter vorgesehen sein können, die jeweils in einem Messabschnitt mit dem Fahrzeugteil 2 oder mit einem weiteren Fahrzeugteil 2' elektrisch leitend verbunden sind und damit eine Temperaturdifferenz ΔT von dem jeweiligen Messabschnitt an die Messeinheit 5 übermitteln können.

Figur 3 zeigt eine bevorzugte Ausführungsform, bei welcher der erste Leiter 4 und/oder der zweite Leiter 6 in einer Nut 26 angeordnet ist, welche am Fahrzeugteil 2 ausgeführt ist. Bei dieser Ausführungsform ist somit der entsprechende Leiter 4, 6 besonders platzsparend und geschützt gegen Umwelteinflüsse am Fahrzeugteil 2 angeordnet.

Figur 4 zeigt eine Alternative zu der in Figur 3 gezeigten Ausführungsform, bei welcher ein Leiter 4, 6 als flaches Band ausgeführt ist und entsprechend platzsparend und mit wenig hervorragenden Außenkanten am Fahrzeugteil 2 angeordnet ist. Es versteht sich in diesem Zusammenhang, dass auch ein flacher, und als Band ausgeführter Leiter 4, 6 zusätzlich in einer, an dem Fahrzeugteil 2 ausgebildeten Nut 26 angeordnet sein kann, wobei insbesondere bevorzugt eine ebene Oberfläche des Verbundes aus Leiter 4, 6 und Fahrzeugteil 2 erreicht wird.

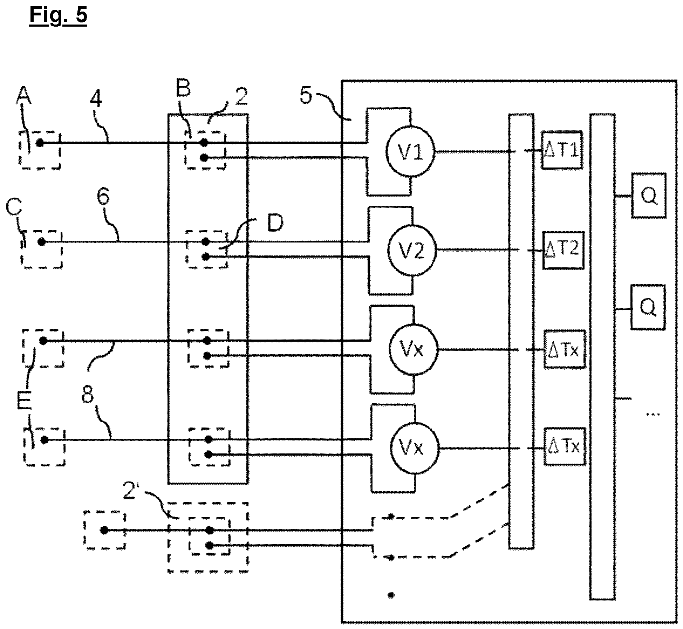

Figur 5 schließlich zeigt ein vereinfachtes Blockschaubild, welches insbesondere die in die Messeinheit 5 eingehenden Messersignale und die daraus ermittelte jeweilige Spannung, und daraus ermittelten Temperaturdifferenzen verdeutlicht. An dem nur schematisch dargestellten Fahrzeugteil 2 ist eine Vielzahl von Messabschnitten A, B, C, D, E angeordnet, wobei jeweils ein Leiter 4, 6, 8 vorgesehen ist, welcher zwischen zwei Messabschnitten verlegt ist und dabei im jeweils linken der Messabschnitte A, C, E mit dem Fahrzeugteil 2 elektrisch leitend verbunden ist. Basierend auf dem Prinzip, dass die zwischen einem Leiter 4, 6, 8 und dem Fahrzeugteil 2 in dem Messabschnitt B, D, in welchem das Fahrzeugteil und der jeweilige Leiter getrennt voneinander sind, gemessene Spannung in einem bestimmten Verhältnis zu der zwischen zwei Messabschnitten bestehenden Temperaturdifferenz ΔT steht, ermittelt die Messeinheit 5 in einem nur schematisch dargestellten Prozessor mit einem Datenspeicher aus den jeweiligen Spannungen V1, V2, VX die entsprechenden Temperaturdifferenzen ΔT1, ΔT2, ΔTX. Aus diesen Temperaturdifferenzen wiederum kann ein entsprechendes Wärmestromverhältnis Q ermittelt werden, welches ein Ausdruck für das Verhältnis der in bestimmten Bereichen des Fahrzeugteils 2 eingebrachten Wärmeströme in das Fahrzeugteil 2 ist. So kann beispielsweise, wenn das Wärmestromverhältnis Q zwischen einem Bereich des Fahrzeugteils 2, an welchem ein Wälzlager 24 am Fahrzeugteil 2 angeordnet ist und einem Bereich, an welchem ein Bremsträger eines Bremssystems 9 am Fahrzeugteil 2 angeordnet ist einem bestimmten Wert überschreitet, der im Lagerabschnitt 22 eingebrachte Wärmestrom also ungewöhnlich hoch ist, ein Rückschluss darauf gezogen werden das im entsprechenden Lager unverhältnismäßig hoher Verschleiß vorliegt. Es versteht sich das im Rahmen der vorliegenden Erfindung die entsprechenden Messabschnitte A, C, E an einer Vielzahl von ausgewählten Orten an einem Fahrzeugteil angeordnet sein können, um in diesen Messabschnitten entsprechend Vergleiche zwischen den vorliegenden Temperaturdifferenzen bezogen auf einen beabstandeten, vorzugsweise zentralen Messabschnitt B, D feststellen zu können. In Figur 5 ist schematisch auch die Möglichkeit angedeutet, dass an einem weiteren Fahrzeugteil 2' ein oder eine Vielzahl weiterer Messabschnitte vorgesehen sein kann, welche ebenfalls mit der Messeinheit 5 in Verbindung gebracht werden, um in weiteren Fahrzeugteilen 2' ebenfalls Messungen zu auftretenden Temperaturdifferenzen durchführen zu können. Es lässt sich hierbei zusätzlich oder alternativ zur Feststellung von ungewöhnlichen Temperaturverhältnissen innerhalb eines Fahrzeugteils 2 auch feststellen, ob ungewöhnliche Temperaturverhältnisse zwischen verschiedenen Fahrzeugteilen 2, 2' eines Fahrzeuges vorliegen.

### Bezugszeichenliste:

- 1 -: Sensorsystem
- 2 -: Fahrzeugteil
- 2' -: weiteres Fahrzeugteil
- 22 -: Lagerabschnitt
- 24 -: Wälzlager
- 26 -: Nut
- 4 -: erster Leiter
- 5 -: Messeinheit
- 6 -: zweiter Leiter
- 8 -: weiterer Leiter
- 9 -: Bremssystem
- A -: erster Messabschnitt
- B -: zweiter Messabschnitt
- C -: dritter Messabschnitt
- D -: vierter Messabschnitt
- E -: weiterer Messabschnitt
- Q -: Wärmestromverhältnis
- R -: Referenzbereich
- U -: zu überwachender Bereich
- V1 -: erste elektrische Spannung
- V2 -: zweite elektrische Spannung
- VX -: weitere elektrische Spannung
- ΔT1 -: erste Temperaturdifferenz
- ΔT2 -: zweite Temperaturdifferenz
- ΔTX -: weitere Temperaturdifferenz

## Patentansprüche

1. Sensorsystem (1) zum Einsatz in einem Fahrzeug,
umfassend einen ersten Leiter (4) und ein Fahrzeugteil (2),
wobei der erste Leiter (4) aus einem anderen Material ausgebildet ist als das Fahrzeugteil (2),
wobei der erste Leiter (4) nur in einem ersten Messabschnitt (A) elektrisch leitend mit dem Fahrzeugteil (2) verbunden ist und beabstandet vom ersten Messabschnitt (A) elektrisch isoliert vom Material des Fahrzeugteils (2) an diesem festgelegt ist,
wobei im ersten Messabschnitt (A) eine erste Temperatur vorliegt, welche sowohl im Material des erste Leiters (4) im Bereich des ersten Messabschnitts (A) als auch im Material des Fahrzeugteils (2) im ersten Messabschnitts (A) vorliegt,
wobei der erste Leiter (4) in einem zweiten Messabschnitt (B), welcher beabstandet vom ersten Messabschnitt (A) am Fahrzeugteil (2) angeordnet und festgelegt ist, derart, dass der erste Leiter (4) im Bereich des zweiten Messabschnitts (B) eine zweite Temperatur hat, welche im Wesentlichen auch im Material des Fahrzeugteils (2) im zweiten Messabschnitt (B) vorliegt,
**dadurch gekennzeichnet, dass**
das Sensorsystem (1) eine Messeinheit (5) umfasst, welche ausgelegt ist, im Bereich des zweiten Messabschnitts (B) eine erste elektrische Spannung (V1) zwischen dem ersten Leiter (4) und dem Fahrzeugteil (2) zu messen und aus dieser ersten elektrischen Spannung (V1) eine erste Temperaturdifferenz (ΔT1) zu berechnen.

2. Sensorsystem (1) nach Anspruch 1,
wobei der erste Leiter (4) im Bereich zwischen dem ersten und dem zweiten Messabschnitt (A, B) am Fahrzeugteil (2) formschlüssig und/oder stoffschlüssig festgelegt ist.

3. Sensorsystem (1) nach einem der vorhergehenden Ansprüche,
wobei das erste Fahrzeugteil (2) aus einer eisenhaltigen Legierung ausgebildet ist und der erste Leiter (4) aus einer kupferhaltigen Legierung ausgebildet ist.

4. Sensorsystem (1) nach einem der vorhergehenden Ansprüche, aufweisend einen zweiten Leiter (6), welcher in einem dritten Messabschnitt (C) mit dem Fahrzeugteil (2) elektrisch leitend verbunden ist und beabstandet vom dritten Messabschnitt (C) im zweiten Messabschnitt (B) oder in einem vierten Messabschnitt (D) am Fahrzeugteil (2) angeordnet und festgelegt ist, derart, dass der zweite Leiter (6) im Bereich des zweiten Messabschnitts (B) die zweite Temperatur oder im Bereich des vierten Messabschnitts (D) eine weitere Temperatur aufweist, welche auch im Material des Fahrzeugteils (2) im Bereich des zweiten oder vierten Messabschnitts (B, D) vorliegt, wobei die Messeinheit (5) ausgelegt ist, eine zweite elektrische Spannung (V2) zwischen dem zweiten Leiter (6) und dem Fahrzeugteil (2) im Bereich des zweiten Messabschnitts (B) oder des vierten Messabschnitts (D) zu messen und aus dieser zweiten elektrischen Spannung (V2) eine zweite Temperaturdifferenz (ΔT2) zu berechnen.

5. Sensorsystem (1) nach einem der vorhergehenden Ansprüche,
wobei der erste Messabschnitt (A) benachbart zu einem Lagerabschnitt (22) des Fahrzeugteils (2) angeordnet ist,
wobei im Lagerabschnitt (22) zumindest ein Wälzlager (24) am Fahrzeugteil (2) festgelegt ist.

6. Sensorsystem (1) nach Anspruch 5,
wobei der dritte Messabschnitt (C) benachbart zu einem Bereich der Festlegung eines Bremssystems (9) am Fahrzeugteil (2) angeordnet ist.

7. Sensorsystem (1) nach Anspruch 4,
aufweisend zumindest einen weiteren Leiter (8) und vorzugsweise eine Vielzahl weiterer Leiter (8), welche(r) in weiteren Messabschnitten (E) mit dem Fahrzeugteil (2) oder einem weiteren Bauteil eines Fahrzeugfahrwerks elektrisch leitend verbunden und an der Messeinheit (5) angeschlossen ist, derart dass weitere Temperaturdifferenzen (ΔTX) zwischen den Messabschnitten (E) und dem zweiten oder vierten Messabschnitt (B, D) ermittelbar sind.

8. Sensorsystem (1) nach einem der vorhergehenden Ansprüche,
wobei zumindest einer der Leiter (4, 6, 8) zumindest bereichsweise in einer am Fahrzeugteil (2) ausgebildeten Nut (26) geführt ist.

9. Sensorsystem (1) nach einem der vorhergehenden Ansprüche,
wobei zumindest einer der Leiter (4, 6, 8) als flaches, vorzugsweise selbstklebendes Band ausgeführt ist.

10. Sensorsystem (1) nach einem der vorhergehenden Ansprüche,
wobei zumindest einer der Leiter (4, 6, 8) auf das Fahrzeugteil (2) aufgedruckt ist.

11. Einsatz eines Sensorsystems (1) nach Anspruch 1 und Anspruch 4 in einem Nutzfahrzeug zur Bestimmung ungewollt hoher Temperaturen in einem bestimmten zu überwachenden Bereich (U) eines Fahrzeugteils (2),
wobei der erste Messabschnitt (A) in dem zu überwachenden Bereich (U) angeordnet ist und
wobei ein dritter Messabschnitt (C) in einem Referenzbereich (R) des Nutzfahrzeuges angeordnet ist.

12. Einsatz eines Sensorsystems (1) nach Anspruch 11,
wobei der zu überwachende Bereich (U) zumindest ein Wälz- oder Gleitlager einschließt,
wobei der Referenzbereich (R) vorzugsweise der Anschlussbereich einer Bremsscheibe oder eines Bremsträgers ist.

13. Einsatz eines Sensorsystems (1) nach einem der Ansprüche 11 oder 12, wobei aus zwei von der Messeinheit (5) bestimmten Temperaturdifferenzen (ΔT1, ΔT2) des Sensorsystems (1) ein Wärmestromverhältnis (Q) zwischen dem zu überwachenden Bereich (U) und dem Referenzbereich (R) ermittelt wird.

14. Verfahren zur Zustandsüberwachung in einem Fahrzeug,
aufweisend die Schritte:
a) Bereitstellen eines Fahrzeugteils (2) an welchem zumindest ein erster Leiter (4) angeordnet und festgelegt ist,
wobei der erste Leiter (4) nur in einem ersten Messabschnitt (A) elektrisch leitend mit dem Fahrzeugteil (2) verbunden ist;
b) Verbinden einer Messeinheit (5) mit dem ersten Leiter (4) und mit dem Fahrzeugteil (2) in einem zweiten Messabschnitt (B);
c) Ermitteln einer ersten elektrischen Spannung (V1) zwischen dem ersten Leiter (4) und dem Fahrzeugteil (2) im zweiten Messabschnitt (B);
d) Berechnen einer ersten Temperaturdifferenz (ΔT1) zwischen dem ersten und dem zweiten Messabschnitt (A, B).

15. Verfahren nach Anspruch 14, aufweisend die weiteren Schritte:
e) Bereitstellen eines zweiten Leiters (6), welcher nur in einem dritten Messabschnitt (C) elektrisch leitend mit dem Fahrzeugteil (2) verbunden ist;
f) Verbinden der Messeinheit (5) mit dem zweiten Leiter (6) im zweiten Messabschnitt (B) oder in einem vierten Messabschnitt (D);
g) Ermitteln einer zweiten elektrischen Spannung (V2) zwischen dem zweiten Leiter (6) und dem Fahrzeugteil (2) im zweiten Messabschnitt (B) oder vierten Messabschnitt (D);
h) Berechnen einer zweiten Temperaturdifferenz (ΔT2) zwischen dem dritten Messabschnitt (C) und dem zweiten oder vierten Messabschnitt (B, D);
i) Vergleich der ersten mit der zweiten Temperaturdifferenz (ΔT1, ΔT2) und Ermitteln eines Wärmestromverhältnisses (Q) zwischen dem ersten und dem dritten Messabschnitt (A, C).

## Claims

1. A sensor system (1) for use in a vehicle, comprising a first conductor (4) and a vehicle component (2), wherein the first conductor (4) is made of a different material than the vehicle component (2), wherein the first conductor (4) is electrically conductively connected to the vehicle component (2) only in a first measurement section (A) and, spaced apart from the first measurement section (A), is fixed to the vehicle component (2) in a manner electrically insulated from the material of the vehicle component (2), wherein a first temperature prevails in the first measurement section (A), which is present both in the material of the first conductor (4) in the region of the first measurement section (A) and in the material of the vehicle part (2) in the first measurement section (A), wherein the first conductor (4) has a second temperature in a second measurement section (B), which is arranged and secured to the vehicle part (2) at a distance from the first measurement section (A), such that the first conductor (4) has a second temperature in the region of the second measurement section (B), which is essentially also present in the material of the vehicle component (2) in the second measurement section (B), **characterized in that** the sensor system (1) comprises a measuring unit (5) that is designed to measure a first electrical voltage (V1) between the first conductor (4) and the vehicle part (2) in the region of the second measurement section (B) and to calculate a first temperature difference (ΔT1) from this first electrical voltage (V1).

2. Sensor system (1) according to claim 1, wherein the first conductor (4) is fixed to the vehicle component (2) by form-fitting and/or cohesive bonding in the region between the first and second measurement sections (A, B).

3. A sensor system (1) according to one of the preceding claims, wherein the first vehicle component (2) is made of an iron-containing alloy and the first conductor (4) is made of a copper-containing alloy.

4. A sensor system (1) according to one of the preceding claims, comprising a second conductor (6), which is electrically conductively connected to the vehicle component (2) in a third measurement section (C) and is arranged and secured to the vehicle component (2) in the second measurement section (B) or in a fourth measurement section (D), spaced apart from the third measurement section (C), such that the second conductor (6) has the second temperature in the region of the second measurement section (B) or a further temperature in the region of the fourth measurement section (D), which temperature is also present in the material of the vehicle part (2) in the region of the second or fourth measurement section (B, D), wherein the measuring unit (5) is designed to measure a second electrical voltage (V2) between the second conductor (6) and the vehicle part (2) in the region of the second measurement section (B) or the fourth measurement section (D) and to calculate a second temperature difference (ΔT2) from this second electrical voltage (V2).

5. A sensor system (1) according to any one of the preceding claims, wherein the first measurement section (A) is arranged adjacent to a bearing section (22) of the vehicle component (2), wherein at least one rolling bearing (24) is fixed to the vehicle component (2) in the bearing section (22).

6. A sensor system (1) according to claim 5, wherein the third measuring section (C) is arranged adjacent to a region where a braking system (9) is secured to the vehicle component (2).

7. A sensor system (1) according to claim 4, comprising at least one additional conductor (8) and preferably a plurality of additional conductors (8), which(r) are electrically conductively connected to the vehicle component (2) or another component of a vehicle chassis in further measurement sections (E) and are connected to the measurement unit (5) in such a way that further temperature differences (ATX) between the measurement sections (E) and the second or fourth measurement section (B, D) can be determined.

8. Sensor system (1) according to one of the preceding claims, wherein at least one of the conductors (4, 6, 8) is routed, at least in some areas, through a groove (26) formed in the vehicle component (2).

9. A sensor system (1) according to one of the preceding claims, wherein at least one of the conductors (4, 6, 8) is designed as a flat, preferably self-adhesive tape.

10. A sensor system (1) according to one of the preceding claims, wherein at least one of the conductors (4, 6, 8) is printed onto the vehicle component (2).

11. Use of a sensor system (1) according to Claim 1 and Claim 4 in a commercial vehicle for detecting undesirably high temperatures in a specific area (U) of a vehicle component (2) to be monitored, wherein the first measuring section (A) is arranged in the area (U) to be monitored and wherein a third measuring section (C) is arranged in a reference area (R) of the commercial vehicle.

12. Use of a sensor system (1) according to Claim 11, wherein the area to be monitored (U) includes at least one rolling or sliding bearing, and wherein the reference area (R) is preferably the connection area of a brake disc or a brake carrier.

13. Use of a sensor system (1) according to one of claims 11 or 12, wherein a heat flux ratio (Q) between the area to be monitored (U) and the reference area (R) is determined from two temperature differences (ΔT1, ΔT2) of the sensor system (1) as determined by the measuring unit (5).

14. A method for condition monitoring in a vehicle, comprising the steps:
a) providing a vehicle component (2) on which at least a first conductor (4) is arranged and secured,
wherein the first conductor (4) is electrically conductively connected to the vehicle component (2) only in a first measurement section (A);
b) connecting a measuring unit (5) to the first conductor (4) and to the vehicle component (2) in a second measurement section (B);
c) Measuring a first electrical voltage (V1) between the first conductor (4) and the vehicle part (2) in the second measurement section (B);
d) Calculating a first temperature difference (ΔT1) between the first and second measurement sections (A, B).

15. The method according to claim 14, comprising the further steps:
e) Providing a second conductor (6) that is electrically conductive to the vehicle component (2) only in a third measurement section (C);
f) Connecting the measuring unit (5) to the second conductor (6) in the second measuring section (B) or in a fourth measuring section (D);
g) Determining a second electrical voltage (V2) between the second conductor (6) and the vehicle component (2) in the second measurement section (B) or fourth measurement section (D);
h) Calculating a second temperature difference (AT2) between the third measurement section (C) and the second or fourth measurement section (B, D);
i) Comparing the first and second temperature differences (AT1, AT2) and determining a heat flux ratio (Q) between the first and third measurement sections (A, C).

## Revendications

1. Système de capteur (1) destiné à être utilisé dans un véhicule,
comprenant un premier conducteur (4) et une pièce de véhicule (2),
dans lequel
le premier conducteur (4) est réalisé en un matériau différent de celui de la pièce de véhicule (2),
le premier conducteur (4) n'est relié de manière électriquement conductrice à la pièce de véhicule (2) que dans une première portion de mesure (A) et est fixé à ladite pièce, à distance de la première portion de mesure (A), de manière électriquement isolée du matériau de la pièce de véhicule (2),
une première température règne dans la première portion de mesure (A), laquelle règne aussi bien dans le matériau du premier conducteur (4) au niveau de la première portion de mesure (A) que dans le matériau de la pièce de véhicule (2) dans la première portion de mesure (A),
le premier conducteur (4) est disposé et fixé sur la pièce de véhicule (2) dans une deuxième portion de mesure (B) à distance de la première portion de mesure (A), de telle sorte que le premier conducteur (4) présente, au niveau de la deuxième portion de mesure (B), une deuxième température qui règne sensiblement également dans le matériau de la pièce de véhicule (2) dans la deuxième portion de mesure (B),
**caractérisé en ce que**
le système de capteur (1) comprend une unité de mesure (5) qui est conçue pour mesurer, au niveau de la deuxième portion de mesure (B), une première tension électrique (V1) entre le premier conducteur (4) et la pièce de véhicule (2), et pour calculer une première différence de température (ΔT1) à partir de cette première tension électrique (V1).

2. Système de capteur (1) selon la revendication 1,
dans lequel le premier conducteur (4) est fixé à la pièce de véhicule (2) par complémentarité de forme et/ou par coopération de matière dans la zone située entre les première et deuxième portions de mesure (A, B).

3. Système de capteur (1) selon l'une des revendications précédentes, dans lequel la première pièce de véhicule (2) est réalisée en un alliage ferreux, et le premier conducteur (4) est réalisé en un alliage cuivreux.

4. Système de capteur (1) selon l'une des revendications précédentes,
comportant un deuxième conducteur (6) qui est relié de manière électriquement conductrice à la pièce de véhicule (2) dans une troisième portion de mesure (C) et qui est disposé et fixé sur la pièce de véhicule (2) dans la deuxième portion de mesure (B) ou dans une quatrième portion de mesure (D), à distance de la troisième portion de mesure (C), de telle sorte que le deuxième conducteur (6) présente, au niveau de la deuxième portion de mesure (B), la deuxième température ou, au niveau de la quatrième portion de mesure (D), une autre température qui règne également dans le matériau de la pièce de véhicule (2) au niveau de la deuxième ou de la quatrième portion de mesure (B, D),
l'unité de mesure (5) étant conçue pour mesurer une deuxième tension électrique (V2) entre le deuxième conducteur (6) et la pièce de véhicule (2) au niveau de la deuxième portion de mesure (B) ou de la quatrième portion de mesure (D), et pour calculer une deuxième différence de température (ΔT2) à partir de cette deuxième tension électrique (V2).

5. Système de capteur (1) selon l'une des revendications précédentes,
dans lequel la première portion de mesure (A) est disposée au voisinage d'une portion de palier (22) de la pièce de véhicule (2),
au moins un palier à roulement (24) est fixé à la pièce de véhicule (2) dans la portion de palier (22).

6. Système de capteur (1) selon la revendication 5,
dans lequel la troisième portion de mesure (C) est disposée sur la pièce de véhicule (2) au voisinage d'une zone de fixation d'un système de freinage (9).

7. Système de capteur (1) selon la revendication 4,
comportant au moins un conducteur supplémentaire (8) et de préférence une pluralité de conducteurs supplémentaires (8) qui sont reliés de manière électriquement conductrice à la pièce de véhicule (2) ou à un autre composant du châssis du véhicule dans d'autres portions de mesure (E), et qui sont raccordés à l'unité de mesure (5), de manière à permettre de déterminer d'autres différences de température (ΔTX) entre les portions de mesure (E) et la deuxième ou la quatrième portion de mesure (B, D).

8. Système de capteur (1) selon l'une des revendications précédentes,
dans lequel l'un au moins des conducteurs (4, 6, 8) est guidé au moins localement dans une rainure (26) ménagée sur la pièce de véhicule (2).

9. Système de capteur (1) selon l'une des revendications précédentes,
dans lequel l'un au moins des conducteurs (4, 6, 8) est réalisé sous la forme d'un ruban plat, de préférence autocollant.

10. Système de capteur (1) selon l'une des revendications précédentes,
dans lequel l'un au moins des conducteurs (4, 6, 8) est imprimé sur la pièce de véhicule (2).

11. Utilisation d'un système de capteur (1) selon la revendication 1 et la revendication 4 dans un véhicule utilitaire afin de détecter des températures anormalement élevées dans une certaine zone à surveiller (U) d'une pièce de véhicule (2),
la première portion de mesure (A) étant disposée dans la zone à surveiller (U), et
une troisième portion de mesure (C) étant disposée dans une zone de référence (R) du véhicule utilitaire.

12. Utilisation d'un système de capteur (1) selon la revendication 11,
la zone à surveiller (U) comprenant au moins un palier à roulement ou un palier lisse,
la zone de référence (R) étant de préférence la zone de raccordement d'un disque de frein ou d'un support de frein.

13. Utilisation d'un système de capteur (1) selon l'une des revendications 11 ou 12,
dans laquelle un rapport de flux thermique (Q) entre la zone à surveiller (U) et la zone de référence (R) est déterminé à partir de deux différences de température (ΔT1, ΔT2) du système de capteur (1) déterminées par l'unité de mesure (5).

14. Procédé de surveillance de l'état dans un véhicule, comprenant les étapes suivantes consistant à :
a) fournir une pièce de véhicule (2) sur laquelle au moins un premier conducteur (4) est disposé et fixé, le premier conducteur (4) n'étant relié de manière électriquement conductrice à la pièce de véhicule (2) que dans une première portion de mesure (A) ;
b) relier une unité de mesure (5) au premier conducteur (4) et à la pièce de véhicule (2) dans une deuxième portion de mesure (B) ;
c) déterminer une première tension électrique (V1) entre le premier conducteur (4) et la pièce de véhicule (2) dans la deuxième portion de mesure (B) ;
d) calculer une première différence de température (ΔT1) entre les première et deuxième portions de mesure (A, B).

15. Procédé selon la revendication 14, comprenant les étapes supplémentaires consistant à :
e) fournir un deuxième conducteur (6) qui n'est relié de manière électriquement conductrice à la pièce de véhicule (2) que dans une troisième portion de mesure (C) ;
f) relier l'unité de mesure (5) au deuxième conducteur (6) dans la deuxième portion de mesure (B) ou dans une quatrième portion de mesure (D) ;
g) déterminer une deuxième tension électrique (V2) entre le deuxième conducteur (6) et la pièce de véhicule (2) dans la deuxième portion de mesure (B) ou dans la quatrième portion de mesure (D) ;
h) calculer une deuxième différence de température (ΔT2) entre la troisième portion de mesure (C) et la deuxième ou la quatrième portion de mesure (B, D) ;
i) comparer la première et la deuxième différence de température (ΔT1, ΔT2) l'une à l'autre, et déterminer un rapport de flux thermique (Q) entre la première et la troisième portion de mesure (A, C).
